# EUROPÄISCHE PATENTSCHRIFT

(11) **EP 4 692 623 B1**
(45) Veröffentlichungstag und Bekanntmachung des Hinweises auf die Patenterteilung: **23.09.2026**
(21) Anmeldenummer: 24193726.7
(22) Anmeldetag: 08.08.2024
(51) Int. Cl.: F16L 33/30, E03C 1/04, F16L 33/32, F16L 33/34

(54) **LASERSCHWEISSEN**
LASER WELDING
SOUDAGE AU LASER

(43) Veröffentlichungstag der Anmeldung: 11.02.2026
(73) Patentinhaber: Neoperl GmbH, 79379 Müllheim (DE)
(72) Erfinder: Tempel, Marc, 79111 Freiburg (DE); Schürle, Holger, 79379 Müllheim (DE); Kury, Werner, 79379 Müllheim (DE); Oechsle, Daniel, 79379 Müllheim (DE)
(74) Vertreter: Mertzlufft-Paufler, Cornelius

(56) Entgegenhaltungen:
- EP-B1- 3 663 471
- DE-A1- 102017 121 997
- DE-A1- 102020 127 375
- DE-A1- 102020 204 492

## Beschreibung

Die Erfindung betrifft eine sanitäre Einbauanordnung, welche ein Anschlussteil und einen Schlauch umfasst, wobei das Anschlussteil über eine Schlauchaufnahme verfügt, welche mit dem Schlauch in einer Verbindungsrichtung überlappt, wobei eine stoffschlüssige Verbindung zwischen dem Anschlussteil und dem Schlauch besteht. Eine derartige sanitäre Einbauanordnung findet in der Praxis Anwendung.

Die Erfindung betrifft weiter die Verwendung einer sanitären Einbauanordnung. Eine derartige Verwendung ist bekannt.

Die Erfindung betrifft weiter eine Sanitärarmatur. Sanitärarmaturen sind im Stand der Technik bekannt.

Die Erfindung betrifft weiter ein Verfahren zu einem fluidischen Anschluss eines sanitären Funktionsstücks mit einem Schlauch. Ein derartiges Verfahren ist im Stand der Technik bekannt.

Stand der Technik zum Verbinden von Schläuchen und Fittings ist das Crimpen oder Moulden. Beim Crimpen kommt es jedoch zu einer nachteilhaften mechanischen Beanspruchung des Fittings. Das Moulden, bei dem der Fitting gespritzt wird, ist nachteilhaft aufwendig. Besonders im Sanitärbereich ist die Verbindung von Hartkomponenten, beispielsweise dem Fitting und flexiblen Komponenten, beispielsweise von Schläuchen, relevant. Die vorliegende Erfindung schafft eine Alternative, die die genannten Probleme löst.

Aus der DE 10 2017 121 997 A1 ist bereits eine insbesondere für eine Legionellen-Untersuchung von Trinkwasser vorgesehene Probenentnahmevorrichtung bekannt, welche einen Schlauch und eine Anschlussvorrichtung aufweist. Die Anschlussvorrichtung ist an einem Ende des Schlauches angeordnet und zu einer Befestigung des Schlauches an einem Wasserauslauf einer Sanitärarmatur eingerichtet. Schlauch kann mit einer Schlauchaufnahme stoffschlüssig verbunden sein.

Aus der EP 3 663 471 B1 ist ein Schlauch zur Wasserleitung in einem wasserführenden System und zum Anschließen wenigstens einer Sanitärarmatur an eine Wasserversorgungsleitung ausgebildet ist bekannt. Der Schlauch weist einen Schlauchabschnitt aus Kunststoff und wenigstens ein abweichend zum Schlauchabschnitt ausgebildetes Anschlussstück aus Kunststoff auf, wobei ein Ende des Schlauchabschnitts und das Anschlussstück durch Fügen dauerhaft verbunden sind.

Ferner ist aus DE 10 2020 127 375 A1 eine fluidische Anordnung für eine Sanitärarmatur bekannt, mit einem Auslaufstück und einem Ventil und einem Schlauch, der das Auslaufstück mit dem Ventil fluidisch verbindet. Dabei ist der Schlauch an einer in Gebrauchsstellung des Ventils von dem Auslaufstück abgewandten Stelle des Ventils fluidisch angeschlossen und er hat an einer von seinen beiden Enden beabstandeten Stelle eine Umlenkung. Die Umlenkung kann mittels eines zwei Schlauchstücke fluidisch verbindenden Verbindungselements hergestellt sein, wobei die Schlauchstücke stoffschlüssig in ihrer Schlauchaufnahme gehalten sind.

Darüber hinaus ist aus DE 10 2020 204 492 A1 eine Flüssigkeitsleitung mit einem Kunststoff-Wellschlauch beispielsweise zum Führen von Waschflüssigkeit bei Kraftfahrzeugreinigungsanlagen bekannt.

Der Erfindung liegt die Aufgabe zugrunde, die Verbindungseigenschaften und Betriebseigenschaften einer sanitären Einbauanordnung zu verbessern. Die Aufgabe wird durch die Merkmale der unabhängigen Ansprüche gelöst. Vorteilhafte Ausgestaltungen sind in den Unteransprüchen beschrieben.

Es ist darauf hinzuweisen, dass die in den abhängigen Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Zur Lösung der gestellten Aufgabe schlägt die Erfindung die Merkmale von Anspruch 1 vor. Insbesondere wird somit erfindungsgemäß bei einer sanitären Einbauanordnung der eingangs beschriebenen Art zur Lösung der genannten Aufgabe vorgeschlagen, dass eine stoffschlüssige Verbindung zwischen dem Anschlussteil und dem Schlauch besteht. Somit kann eine zuverlässige und dauerhafte Verbindung zwischen dem Schlauch und dem Anschlussteil bereitgestellt werden.

Ferner ist vorgesehen, dass das Anschlussteil in einem Spektralbereich lichtdurchlässig ist, in welchem der Schlauch absorbierend ausgebildet ist. Somit kann gewährleistet werden, dass ein Laserstrahl das Anschlussteil durchdringen kann, ohne für eine Erwärmung oder Erhitzung zu sorgen und somit das Material nicht aufgeschmolzen wird. Die Aufschmelzung des Materials erfolgt erst an dem Schlauch beziehungsweise an dem Interface zwischen dem Schlauch und dem Anschlussteil. Somit ist ein Laserschweißen von außen durch das Anschlussteil möglich.

Weiter ist vorgesehen, dass das Anschlussteil mit einer Beimischung versehen ist. Somit kann die Materialqualität des Anschlussteils verbessert werden. Die Beimischung kann beispielsweise ein Ruß oder ein Flammschutzmittel sein.

Die Beimischung beinhaltet zumindest teilweise ein Verstärkungsadditiv. Das Verstärkungsadditiv ist optisch transparent. Somit kann es durch einen Laserstrahl nicht angegriffen werden und der Laserstrahl dringt hierbei hindurch und kann am Schlauch absorbiert werden. Bevorzugt ist das Verstärkungsadditiv ein Faserwerkstoff, beispielsweise Glasfaser oder Aramidfaser. Benutzte Additive bei Kunststoffen sind typischerweise Weichmacher (z.B.: Diethylhexylphthalat), Stabilisatoren, Farbmittel oder Füllstoffe.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Bei einer vorteilhaften Ausgestaltung kann vorgesehen sein, dass der Schlauch in die Schlauchaufnahme eingeführt ist. Dies führt zu einer mechanisch stabilen Anordnung.

Alternativ kann es vorgesehen sein, dass das Anschlussteil in den Schlauch eingeführt wird. Ob das Anschlussteil in den Schlauch eingeführt wird oder umgekehrt hängt von den Betriebsbedingungen, insbesondere Betriebsdruck, Temperatur und Strömungsrate, ab.

Bei einer vorteilhaften Ausgestaltung kann vorgesehen sein, dass das Anschlussteil zu einer Aufnahme eines sanitären Funktionsstückes eingerichtet ist. Bevorzugt ist das sanitäre Funktionsstück ein Strahlregler. Alternativ kann das sanitäre Funktionsstück auch ein Mengenregler sein. Somit kann die Funktionalität der sanitären Einbauanordnung weiter verbessert werden.

Bei einer vorteilhaften Ausgestaltung kann vorgesehen sein, dass das Anschlussteil als ein Fitting ausgebildet ist. Bevorzugt ist das Fitting als Steck- und/oder Schraubfitting ausgebildet. Somit kann eine Verbindungsqualität verbessert werden.

Als Fitting werden hier Verbindungsstücke für Rohrleitungen in der Versorgungs- und Montagetechnik bezeichnet, die überwiegend zur Herstellung von Rohrleitungsverbindungen dienen.

Bei einer vorteilhaften Ausgestaltung kann vorgesehen sein, dass die stoffschlüssige Verbindung durch Schweißen erzeugt wird. Bevorzugt wird die stoffschlüssige Verbindung durch Laserschweißen oder Ultraschallschweißen oder Thermoschweißen erzeugt. Somit kann eine dauerhaft feste und unlösbare Verbindung hergestellt werden. Dies ist besonders bei hohen Strömungsraten vorteilhaft.

Bei einer vorteilhaften Ausgestaltung kann vorgesehen sein, dass der Schlauch unmittelbar oder mittelbar eine Verbindung zwischen einer Ventilkartusche und dem Anschlussteil erzeugt. Somit kann die Funktionalität des Schlauchs verbessert werden. Als unmittelbar wird hier eine Situation beschrieben, in welcher zwischen dem Anschlussteil und der Ventilkartusche keine weiteren sanitären Elemente neben dem Schlauch ausgebildet sind. Als mittelbar wird hier eine Situation beschrieben, in welcher zwischen dem Anschlussteil und der Ventilkartusche weitere sanitäre Elemente, beispielsweise Strahlregler oder Mengenregler, neben dem Schlauch ausgebildet sind.

Bei einer vorteilhaften Ausgestaltung kann vorgesehen sein, dass der Schlauch und das Anschlussteil aus einem Grundmaterial einer gleichen Kunststoffart gefertigt sind. Bevorzugt sind der Schlauch und das Anschlussteil aus demselben Grundmaterial gefertigt. Somit kann eine Verbesserung der Verbindung zwischen diesen beiden Teilen erreicht werden. Gleiche Kunststoffarten können beispielsweise Polyolefine oder Polyketone sein. Gleiche Kunststoffarten wirken sich vorteilhaft auf die Ausbildung einer stoffschlüssigen Verbindung mittels Schweißen, insbesondere Laserschweißen, aus. Die stoffschlüssige Verbindung kann somit eine höhere Qualität aufweisen.

Bei einer vorteilhaften Ausgestaltung kann vorgesehen sein, dass das Grundmaterial des Schlauches und des Anschlussteils Polyethylen, Polypropylen, Polyamid und zusätzlich oder alternativ Polyketon oder eine Mischung davon aufweist. Die Mischung des Schlauches und die Mischung des Anschlussteils können hier identisch oder unterschiedlich sein. Experimente mit den genannten Stoffen haben sich als besonders vorteilhaft erwiesen, insbesondere bezüglich der Schweißbarkeit. Die zu schweißenden Kunststoffe sind bevorzugt thermoplastische Kunststoffe.

Bei einer vorteilhaften Ausgestaltung kann vorgesehen sein, dass das Grundmaterial optisch transparent ist. Somit kann der Laserstrahl hindurchstrahlen und punktgenau an eine Stelle zwischen dem Anschlussteil und dem Schlauch fokussiert werden.

Bei einer vorteilhaften Ausgestaltung kann vorgesehen sein, dass zwischen dem Schlauch und dem Anschlussteil eine vorzugsweise umlaufende und zusätzlich oder alternativ in Umfangsrichtung orientierte Laserschweißnaht ausgebildet ist. Somit kann eine stoffschlüssige Verbindung zwischen dem Schlauch und dem Anschlussteil erreicht werden. Die Laserschweißnaht kann umlaufend oder nur teilweise umlaufend, insbesondere punktuell, ausgebildet sein. Alternativ kann die Laserschweißnaht intermittierend sein.

Bei einer vorteilhaften Ausgestaltung kann vorgesehen sein, dass der Schlauch in einer Presspassung in dem Anschlussteil angeordnet ist. Somit kann eine gute Ausbildung der Laserschweißnaht erreicht werden und schon eine gewisse Abdichtung ohne Laserschweißnaht. Eine Presspassung wird im Maschinenbau auch als Übermaßpassung bezeichnet. In einer Presspassung ist das Größtmaß einer Bohrung in jedem Fall kleiner als das Kleinstmaß der Welle. Somit muss Energie aufgewendet werden, um die Welle in die Bohrung zu klemmen und zu befördern.

Eine Presspassung ist eine Art von Passung, bei der die Teile, die zusammengefügt werden sollen, einen Übermaßpassung aufweisen. Das bedeutet, dass der Außendurchmesser des einen Teils (meistens eine Welle) etwas größer ist als der Innendurchmesser des anderen Teils (meistens eine Bohrung). Durch diese Übermaßpassung entsteht eine feste, spielfreie Verbindung, die durch das Einpressen des größeren Teils in den kleineren erreicht wird.

Bei einer vorteilhaften Ausgestaltung kann vorgesehen sein, dass die Laserschweißnaht sich über einen Axialbereich erstreckt, der größer ist als eine Linienbreite der Laserschweißnaht selbst. Somit kann eine hohe Verbindungsqualität erreicht werden. Zum Beispiel kann die Laserschweißnaht hier als Zick-Zack-Naht ausgebildet sein oder es können mehrere parallele Laserschweißnähte ausgebildet sein. Mehrere parallele Laserschweißnähte sind dann vorteilhaft, wenn eine höhere Verbindungsqualität erreicht werden soll oder in einem Fall, in welchem die Grundmaterialien des Anschlussteils und des Schlauchs unterschiedlich sind und eine einzelne Laserschweißnaht zur Verbindung nicht ausreichend ist.

Bei einer vorteilhaften Ausgestaltung kann vorgesehen sein, dass das Anschlussteil eine größere Steifigkeit und zusätzlich oder alternativ eine größere Härte als der Schlauch aufweist. Somit kann das Anschlussteil eine Befestigungsfunktion an einer Armatur oder einem Rahmen übernehmen.

Als Steifigkeit wird hier der Widerstand eines Körpers gegen eine durch äußere Belastung (eine Kraft oder ein Drehmoment) bewirkte elastische Verformung und dessen Verformung bezeichnet. Die Steifigkeit ist ein übergeordneter Begriff und umfasst die Dehnsteifigkeit, die Schubsteifigkeit, die Biegesteifigkeit und die Torsionssteifigkeit. Als Härte wird der mechanische Widerstand, den ein Werkstoff der mechanischen Eindringung eines anderen Körpers entgegensetzt bezeichnet.

Bei einer vorteilhaften Ausgestaltung kann vorgesehen sein, dass das Anschlussteil in einem sichtbaren Spektralbereich transparent oder transluzent ausgebildet ist. Somit ist eine Sichtkontrolle der stoffschlüssigen Anbindung des Anschlussteils und des Schlauchs von außen möglich und durch das Anschlussteil möglich. Als Transluzenz wird die partielle Lichtdurchlässigkeit eines Körpers verstanden. Als Transparenz wird die vollständige Lichtdurchlässigkeit eines Körpers verstanden. Als sichtbarer Spektralbereich wird der Lichtbereich mit Wellenlängen zwischen 380 Nanometer und 780 Nanometer verstanden.

Bei einer vorteilhaften Ausgestaltung kann vorgesehen sein, dass die sanitäre Einbauanordnung zu einem Einbau in einer Sanitärarmatur ausgebildet ist. Bevorzugt ist die sanitäre Einbauanordnung zu einem Einbau in einem Auslaufrohr ausgebildet. Somit kann eine verbesserte Funktionalität der sanitären Einbauanordnung erreicht werden.

Zur Lösung der genannten Aufgabe sind erfindungsgemäß die Merkmale des auf eine Verwendung einer sanitären Einbauanordnung gerichteten nebengeordneten Anspruchs 15 vorgesehen. Insbesondere wird zur Lösung der genannten Aufgabe somit erfindungsgemäß bei einer Verwendung der eingangs beschriebenen Art vorgeschlagen, dass die sanitäre Einbauanordnung mit einem der obig erwähnten Merkmale ausgebildet ist und dass die sanitäre Einbauanordnung in einer Sanitärarmatur verwendet wird. Bevorzugt wird der Schlauch in einem Auslaufrohr der Sanitärarmatur angeordnet. Somit kann die volle Funktionalität der sanitären Einbauanordnung erreicht werden.

Zur Lösung der genannten Aufgabe sind erfindungsgemäß die Merkmale des auf eine Sanitärarmatur gerichteten nebengeordneten Anspruchs 16 vorgesehen. Insbesondere wird zur Lösung der genannten Aufgabe somit erfindungsgemäß bei einer Sanitärarmatur der eingangs beschriebenen Art vorgeschlagen, dass die Sanitärarmatur eine sanitäre Einbauanordnung nach einem der obig genannten Merkmale verfügt. Somit können die Funktionalität und die Betriebseigenschaften einer Sanitärarmatur verbessert werden.

Zur Lösung der genannten Aufgabe sind erfindungsgemäß die Merkmale des auf ein Verfahren zu einem fluidischen Anschluss eines sanitären Funktionsstücks, insbesondere eines Strahlreglers, mit einem Schlauch gerichteten nebengeordneten Anspruchs 17 vorgesehen. Insbesondere wird zur Lösung der genannten Aufgabe somit erfindungsgemäß bei einem Verfahren der eingangs beschriebenen Art vorgeschlagen, dass das sanitäre Funktionsstück mit einem Anschlussteil fluidisch verbunden wird und der Schlauch mit dem Anschlussteil steckverbunden wird, wobei der Schlauch und das Anschlussteil gemäß einer sanitären Einbauanordnung nach einem der obig genannten Merkmale ausgebildet ist, wobei der Schlauch und das Anschlussteil stoffschlüssig verbunden werden. Somit kann ein sanitäres Funktionsstück angebunden werden und die Funktionalität der Vorrichtung weiter verbessert werden.

Bei einer vorteilhaften Ausgestaltung kann vorgesehen sein, dass der Schlauch und das Anschlussteil durch Schweißen verbunden werden. Bevorzugt ist das Schweißen ein Laserschweißen, Ultraschallschweißen oder ein Thermoschweißen. Somit kann zwischen dem Schlauch und dem Anschlussteil eine dauerhaft stabile und feste Verbindung erzeugt werden.

Bei einer vorteilhaften Ausgestaltung kann vorgesehen sein, dass das Anschlussteil zumindest bereichsweise durchlässig für ein Laserlicht eines, beispielsweise des bereits erwähnten, Laserschweißens ausgebildet ist. Somit kann das Laserlicht das Anschlussteil durchdringen und eine Laserschweißnaht an einer exakt gewünschten Stelle erzeugen.

Bei einer vorteilhaften Ausgestaltung kann vorgesehen sein, dass dem Anschlussteil ein Verstärkungsadditiv beigemischt wird. Bevorzugt ist das Verstärkungsadditiv ein Faserwerkstoff, beispielsweise Glasfaser oder Aramidfaser. Somit kann die Härte und die Festigkeit des Anschlussteils punktgenau eingestellt werden. Aramidfasern bestehen aus Polyamiden, bei denen die Amidgruppen an aromatischen Gruppen gebunden sind.

Bei einer vorteilhaften Ausgestaltung kann vorgesehen sein, dass ein Strahlquerschnitt eines, beispielsweise des bereits erwähnten, Laserlichts gewählt wird, der größer ist als eine Ausdehnung eines Partikels des Verstärkungsadditivs ist. Somit kann verhindert werden, dass das Laserlicht mit dem Verstärkungsadditiv interagiert, insbesondere es aufschmilzt. Dies wäre für die Härte und Festigkeit des Anschlussteils nachteilig und würde auch zu einer geringeren Schweißqualität führen. Deswegen ist es notwendig, dass die Ausdehnung des Partikels des Verstärkungsadditives kleiner ist als der Strahlquerschnitt des Laserlichts.

Bei einer vorteilhaften Ausgestaltung kann vorgesehen sein, dass der Schlauch mit dem Anschlussteil während des Laserschweißens rotiert wird. Bevorzugt wird der Schlauch mit dem Anschlussteil um eine Längsachse des Schlauches rotiert. Somit kann eine Laserschweißnaht mit guter Qualität erzeugt werden.

Bei einer vorteilhaften Ausgestaltung kann vorgesehen sein, dass ein Laserkopf um den Schlauch mit dem Anschlussteil rotiert wird. Als Laserkopf wird dieser Teil des Lasers bezeichnet, an welchem der Laserstrahl austritt. Somit kann eine alternative Fertigungstechnik angewandt werden.

Bevorzugt wird allerdings der Schlauch und das Anschlussteil rotiert, während die Position des Lasers fest ist. Dies sorgt für die beste (Laser-)Schweißqualität.

Bei einer vorteilhaften Ausgestaltung kann vorgesehen sein, dass der Schlauch mit einer Presspassung mit dem Anschlussteil steckverbunden wird, bevor die stoffschlüssige Verbindung hergestellt wird. Somit kann eine gute und zuverlässige Abdichtung erreicht werden. Bevorzugt wird die stoffschlüssige Verbindung durch Laserschweißen hergestellt. Andere Schweißtechniken, die angewandt werden können, sind Ultraschallschweißen und/oder Thermoschweißen.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Schutzansprüche untereinander und/oder mit einzelnen oder mehreren Merkmalen der Ausführungsbeispiele und/oder der zuvor beschriebenen Varianten erfindungsgemäßer Vorrichtungen, Verwendungen und Verfahren.

Es zeigt:
- Fig. 1: eine erfindungsgemäße sanitäre Einbauanordnung mit zwei Schweißnähten in einer perspektivischen Ansicht und
- Fig. 2: die sanitäre Einbauanordnung aus Fig. 1 in einer weiteren perspektivischen Ansicht und
- Fig. 3: die sanitäre Einbauanordnung aus Fig. 1 in einer weiteren perspektivischen Ansicht und
- Fig. 4: eine erfindungsgemäße sanitäre Einbauanordnung mit einer Schweißnaht in einer perspektivischen Ansicht und
- Fig. 5: die sanitäre Einbauanordnung aus Fig. 4 in einer weiteren perspektivischen Ansicht und
- Fig. 6: die sanitäre Einbauanordnung aus Fig. 4 in einer weiteren perspektivischen Ansicht und
- Fig. 7: eine erfindungsgemäße sanitäre Einbauanordnung mit einer Schweißnaht in einer perspektivischen Ansicht und
- Fig. 8: die sanitäre Einbauanordnung aus Fig. 7 in einer weiteren perspektivischen Ansicht und
- Fig. 9: die sanitäre Einbauanordnung aus Fig. 7 in einer weiteren perspektivischen Ansicht und
- Fig. 10: eine erfindungsgemäße sanitäre Einbauanordnung mit zwei Scheißnähten in einer perspektivischen Ansicht und
- Fig. 11: die sanitäre Einbauanordnung aus Fig. 10 in einer weiteren perspektivischen Ansicht und
- Fig. 12: die sanitäre Einbauanordnung aus Fig. 10 in einer weiteren perspektivischen Ansicht.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

Zur besseren Übersicht sind in den Figuren nicht alle Bezugszahlen gesetzt, obwohl die Elemente sehr wohl in den Figuren vorhanden sein können. Gleiche Bezugszahlen bezeichnen jedoch funktionell und/oder konstruktiv gleiche Bauteile und Funktionseinheiten.

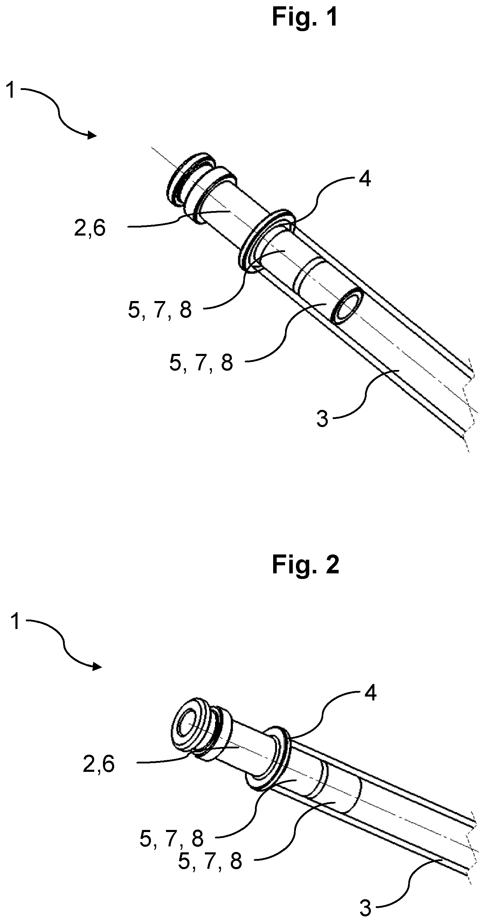

Fig. 1 bis Fig. 3 zeigen eine erfindungsgemäße sanitäre Einbauanordnung 1 mit zwei Schweißnähten 8 in unterschiedlichen perspektivischen Ansichten.

Die sanitäre Einbauanordnung 1 umfasst ein Anschlussteil 2 und einen Schlauch 3. Das Anschlussteil 2 verfügt über eine Schlauchaufnahme 4, welche mit dem Schlauch 3 in einer Verbindungsrichtung überlappt. Es besteht eine stoffschlüssige Verbindung 5 zwischen dem Anschlussteil 2 und dem Schlauch 3.

In den Ausführungsbeispielen der Figuren 1 bis 3 ist das Anschlussteil 2 in den Schlauch 3 gesteckt. Das Anschlussteil 2 ist zu einer Aufnahme eines sanitären Funktionsstückes (hier nicht dargestellt), beispielsweise eines Strahlreglers, eingerichtet.

Das Anschlussteil 2 in den Figuren 1 bis 3 ist als ein Fitting 6 ausgebildet. Das Fitting 6 ist als ein Steckfitting ausgebildet.

In der sanitären Einbauanordnung 1 ist die stoffschlüssige Verbindung durch Schweißen, im konkreten Fall durch Laserschweißen, erzeugt. Alternativ kann die stoffschlüssige Verbindung 5 durch Ultraschallschweißen oder Thermoschweißen erzeugt sein.

Die sanitäre Einbauanordnung 1 in den Fig. 1 bis 3 verfügt über zwei umlaufende Schweißnähte 8, die in den konkreten Beispielen als Laserschweißnähte 7 ausgebildet sind. Die Schweißnähte 8 können teilweise umlaufend sein oder vollständig umlaufend sein.

Der Schlauch 3 kann unmittelbar oder mittelbar eine Verbindung zwischen einer Ventilkartusche (hier nicht gezeigt) und dem Anschlussteil 2 erzeugen.

Der Schlauch 3 und das Anschlussteil 2 sind aus einem Grundmaterial einer gleichen Kunststoffart gefertigt. In einer bevorzugten Ausbildung sind der Schlauch 3 und das Anschlussteil 2 aus demselben Grundmaterial gefertigt.

Das Grundmaterial des Schlauches 3 und des Anschlussteils 2 weist Polyethylen, Polypropylen, Polyamid und zusätzlich oder alternativ Polyketon oder eine Mischung davon auf.

Das Anschlussteil 2 ist mit einer Beimischung versehen, wobei die Beimischung zumindest teilweise ein Verstärkungsadditiv beinhaltet. Das Verstärkungsadditiv ist bevorzugt ein Faserwerkstoff, beispielsweise Glasfaser oder Aramidfaser.

Das Verstärkungsadditiv ist optisch transparent ausgebildet, damit es nicht mit einem Laserstrahl interagiert. Das Grundmaterial ist ebenfalls optisch transparent ausgebildet. Der Schlauch 3 ist in einem Spektralbereich lichtdurchlässig, in welchem das Anschlussteil 2 absorbierend ausgebildet ist.

Das Anschlussteil 2 weist eine größere Steifigkeit und zusätzlich oder alternativ eine größere Härte als der Schlauch 3 auf. Dies ist insgesamt für die mechanische Stabilität vorteilhaft.

Der Schlauch 3 ist in einem sichtbaren Spektralbereich transparent ausgebildet. Alternativ kann der Schlauch 3 in einem sichtbaren Spektralbereich transluzent ausgebildet sein.

Die stoffschlüssige Verbindung 5 wird bevorzugt durch Laserschweißen hergestellt. Bevorzugt wird hierbei der Schlauch 3 mit dem Anschlussteil 2 während des Laserschweißens um eine Längsachse des Schlauches 3 rotiert, während der Laser an sich statisch ausgebildet ist. Alternativ ist es auch denkbar, dass der Laser oder ein Laserkopf um den Schlauch 3 mit dem Anschlussteil 2 rotiert wird.

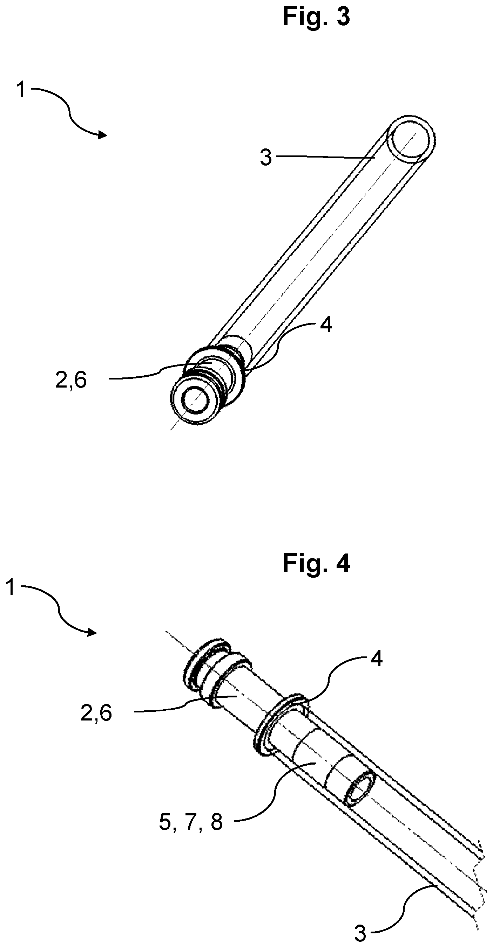

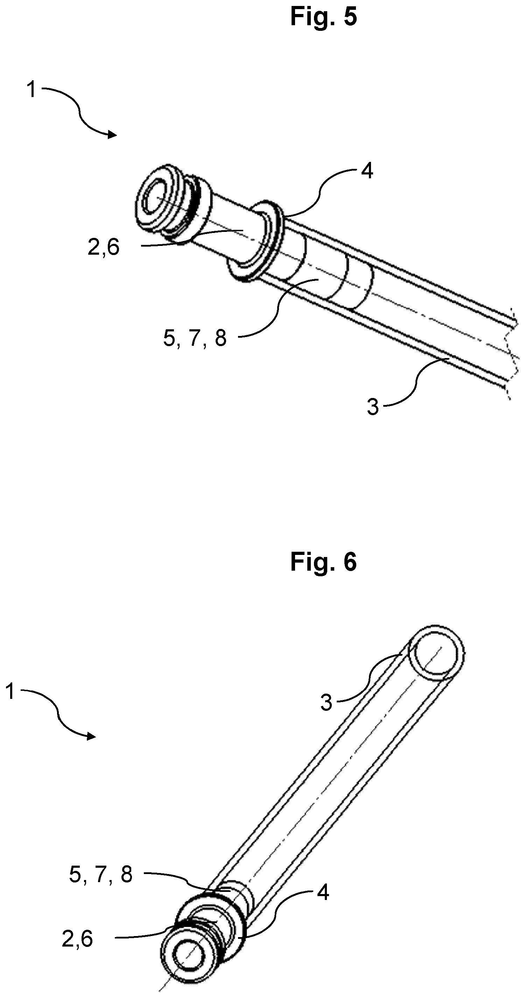

Fig. 4 bis Fig. 6 zeigen eine erfindungsgemäße sanitäre Einbauanordnung 1 mit einer Schweißnaht 8 in unterschiedlichen perspektivischen Ansichten. Die sanitäre Einbauanordnung 1 weist die gleichen Merkmale wie die sanitäre Einbauanordnung 1, die in den Figuren 1 bis 3 beschrieben wurde, auf. Auf eine Duplizierung der Merkmale wird hier verzichtet. Der einzige Unterschied zwischen den Figuren 1 bis 3 und den Figuren 4 bis 6 ist, dass die sanitäre Einbauanordnung 1 zwei Schweißnähte 8 aufweist beziehungsweise eine Schweißnaht 8 aufweist.

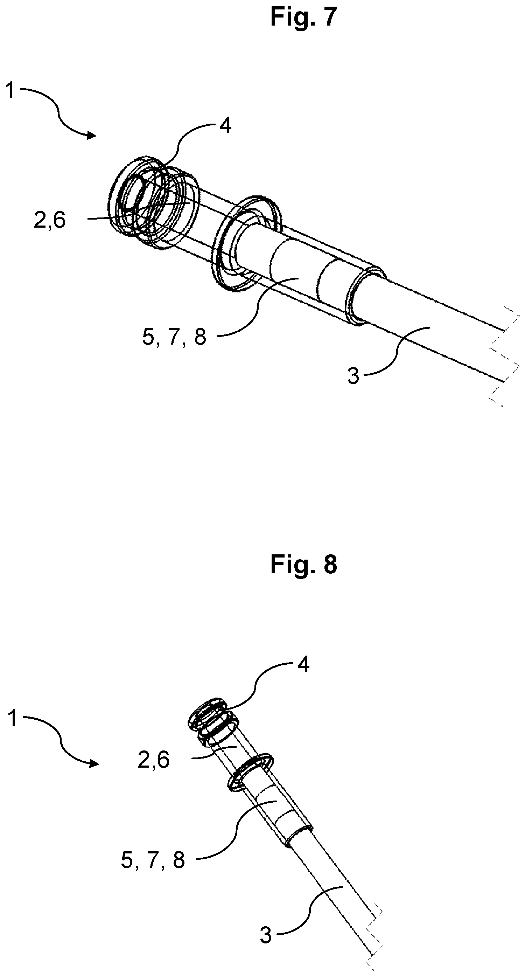

Figuren 7 bis 9 zeigen eine erfindungsgemäße sanitäre Einbauanordnung 1 mit einer Schweißnaht 8 in unterschiedlichen perspektivischen Ansichten.

Die sanitäre Einbauanordnung 1 umfasst ein Anschlussteil 2 und einen Schlauch 3, wobei das Anschlussteil 2 über eine Schlauchaufnahme 4 verfügt. Die Schlauchaufnahme 4 überlappt mit dem Schlauch 3 in einer Verbindungsrichtung. Es besteht zwischen dem Anschlussteil 2 und dem Schlauch 3 eine stoffschlüssige Verbindung 5.

In den konkreten Beispielen ist der Schlauch 3 in die Schlauchaufnahme 4 eingeführt.

Das Anschlussteil 2 ist zu einer Aufnahme eines sanitären Funktionsstückes (hier nicht dargestellt) eingerichtet. Bevorzugt ist das sanitäre Funktionsstück ein Strahlregler.

Das Anschlussteil 2 ist als ein Fitting 6 ausgebildet, nämlich als ein Steckfitting.

Die stoffschlüssige Verbindung 5 ist durch Schweißen, bevorzugt Laserschweißen, erzeugt. Alternative Schweißmethoden, mit welchen die stoffschlüssige Verbindung 5 herstellbar ist, sind Ultraschallschweißen oder Thermoschweißen.

Der Schlauch 3 kann unmittelbar oder mittelbar eine Verbindung zwischen einer Ventilkartusche (hier nicht dargestellt) und dem Anschlussteil 2 erzeugen.

Der Schlauch 3 und das Anschlussteil 2 sind aus einem Grundmaterial einer gleichen Kunststoffart gefertigt. Bevorzugt sind der Schlauch 3 und das Anschlussteil 2 aus demselben Grundmaterial gefertigt.

Das Grundmaterial des Schlauches 3 und des Anschlussteils 2 weist Polyethylen, Polypropylen, Polyamid und zusätzlich oder alternativ Polyketon oder eine Mischung davon auf.

Das Anschlussteil 2 ist mit einer Beimischung versehen. Die Beimischung beinhaltet zumindest teilweise ein Verstärkungsadditiv, bevorzugt einen Faserwerkstoff. Der beinhaltete Faserwerkstoff kann beispielsweise Glasfaser oder Aramidfaser sein.

Das Verstärkungsadditiv ist optisch transparent ausgebildet, damit es nicht mit einem Laserstrahl, welcher zum Laserschweißen verwendet wird, interagiert.

Das Grundmaterial ist optisch transparent ausgebildet.

Zwischen dem Schlauch 3 und dem Anschlussteil 2 ist eine umlaufende Laserschweißnaht 7 ausgebildet. Alternativ kann die Laserschweißnaht 7 in Umfangsrichtung orientiert sein und nicht umlaufend sein. Alternativ kann die Laserschweißnaht 7 intermittierend sein.

Das Anschlussteil 2 ist in einem Spektralbereich lichtdurchlässig, in welchem der Schlauch 3 absorbierend ausgebildet ist. Diese Merkmale sind für ein Laserschweißen, in welchem der Laserstrahl zuerst das Anschlussteil 2 und dann erst den Schlauch 3 durchdringt, wichtig.

Der Schlauch 3 kann in einer Presspassung in dem Anschlussteil 2 angeordnet sein.

Das Anschlussteil 2 weist hierbei eine größere Steifigkeit und zusätzlich oder alternativ eine größere Härte auf als der Schlauch 3.

Das Anschlussteil 2 ist in einem sichtbaren Spektralbereich transparent. Alternativ kann das Anschlussteil 2 in einem sichtbaren Spektralbereich transluzent ausgebildet sein.

Die sanitäre Einbauanordnung 1 ist zu einem Einbau in einer Sanitärarmatur (hier nicht dargestellt), beispielsweise einem Auslaufrohr, ausgebildet.

Der Schlauch 3 und das Anschlussteil 2 sind durch Schweißen, bevorzugt Laserschweißen oder Ultraschallschweißen oder Thermoschweißen, miteinander stoffschlüssig verbunden.

Bevorzugt wird der Schlauch 3 mit dem Anschlussteil 2 während des Laserschweißens um eine Längsachse des Schlauches 3 rotiert. Alternativ kann ein Laserkopf eines Lasers um den Schlauch 3 mit dem Anschlussteil 2 rotiert werden.

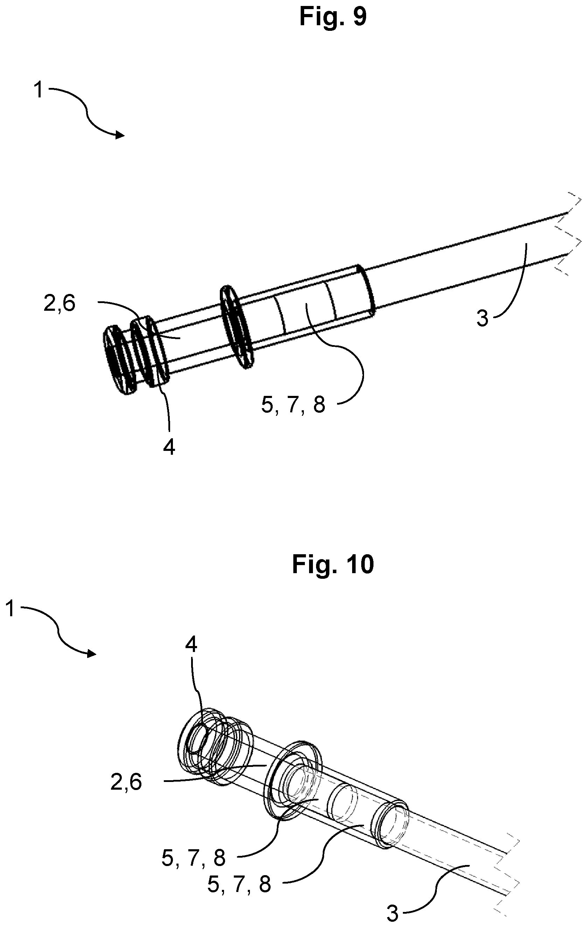

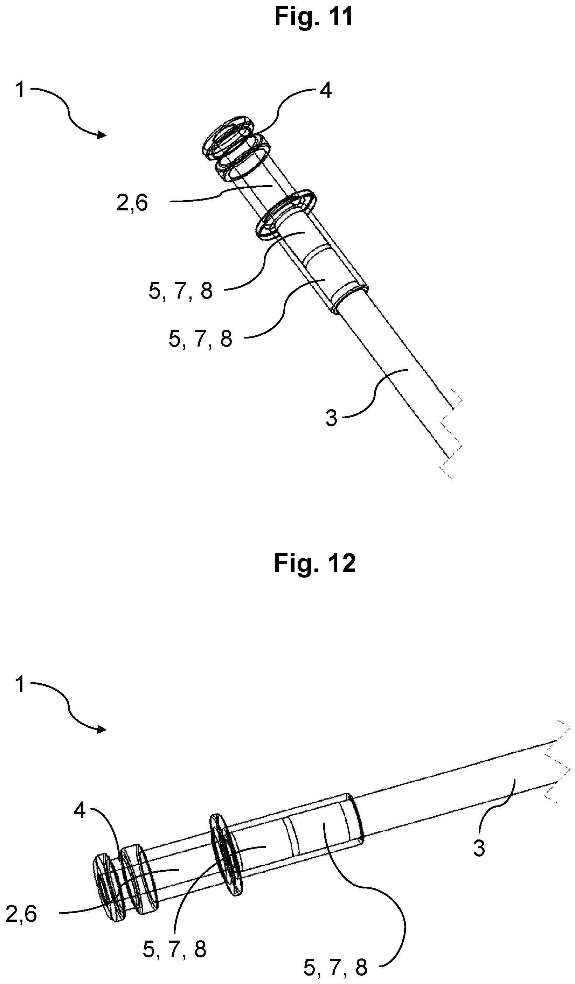

Figuren 10 bis 12 zeigen eine erfindungsgemäße Einbauanordnung 1 mit zwei Schweißnähten 8 in unterschiedlichen perspektivischen Ansichten. Die sanitäre Einbauanordnung 1 der Figuren 10 bis 12 weist hierbei die gleichen Merkmale auf wie die sanitäre Einbauanordnung 1 der Figuren 7 bis 9; lediglich die Anzahl der Schweißnähte 8 ist unterschiedlich. Auf eine Duplizierung der Merkmalsbeschreibung wird hier der Kürze halber wegen verzichtet.

Es wird bei einer sanitären Einbauanordnung 1, welche ein Anschlussteil 2 und einen Schlauch 3 umfasst, vorgeschlagen, dass das Anschlussteil 2 über eine Schlauchaufnahme 4 verfügt, welche mit dem Schlauch 3 in einer Verbindungsrichtung überlappt, und dass eine stoffschlüssige Verbindung 5 zwischen dem Anschlussteil 2 und dem Schlauch 3 besteht.

### Bezugszeichenliste

- 1: sanitäre Einbauanordnung
- 2: Anschlussteil
- 3: Schlauch
- 4: Schlauchaufnahme
- 5: stoffschlüssige Verbindung
- 6: Fitting
- 7: Laserschweißnaht
- 8: Schweißnaht, Schweißnähte

## Patentansprüche

1. Sanitäre Einbauanordnung (1), umfassend ein Anschlussteil (2) und einen Schlauch (3), wobei das Anschlussteil (2) über eine Schlauchaufnahme (4) verfügt, welche mit dem Schlauch (3) in einer Verbindungsrichtung überlappt, wobei eine stoffschlüssige Verbindung (5) zwischen dem Anschlussteil (2) und dem Schlauch (3) besteht, **dadurch gekennzeichnet, dass** das Anschlussteil (2) in einem Spektralbereich lichtdurchlässig ist, in welchem der Schlauch (3) absorbierend ausgebildet ist und dass das Anschlussteil (2) mit einer Beimischung versehen ist, wobei die Beimischung zumindest teilweise ein optisch transparentes Verstärkungsadditiv, vorzugsweise einen Faserwerkstoff, insbesondere Glasfaser oder Aramidfaser, beinhaltet.

2. Sanitäre Einbauanordnung (1) nach Anspruch 1, **dadurch gekennzeichnet, dass** der Schlauch (3) in die Schlauchaufnahme (4) eingeführt ist.

3. Sanitäre Einbauanordnung (1) nach einem der vorgehenden Ansprüche, **dadurch gekennzeichnet, dass** das Anschlussteil (2) zur Aufnahme eines sanitären Funktionsstückes, insbesondere einem Strahlregler, eingerichtet ist.

4. Sanitäre Einbauanordnung (1) nach einem der vorgehenden Ansprüche, **dadurch gekennzeichnet, dass** das Anschlussteil (2) als ein Fitting (6), insbesondere Steck- und/oder Schraubfitting, ausgebildet ist.

5. Sanitäre Einbauanordnung (1) nach einem der vorgehenden Ansprüche, **dadurch gekennzeichnet, dass** die stoffschlüssige Verbindung (5) durch Schweißen, insbesondere Laserschweißen oder Ultraschallschweißen oder Thermoschweißen, erzeugt ist.

6. Sanitäre Einbauanordnung (1) nach einem der vorgehenden Ansprüche, **dadurch gekennzeichnet, dass** der Schlauch (3) unmittelbar oder mittelbar eine Verbindung zwischen einer Ventilkartusche und dem Anschlussteil (2) erzeugt.

7. Sanitäre Einbauanordnung (1) nach einem der vorgehenden Ansprüche, **dadurch gekennzeichnet, dass** der Schlauch (3) und das Anschlussteil (2) aus einem Grundmaterial einer gleichen Kunststoffart, insbesondere demselben Grundmaterial, gefertigt sind.

8. Sanitäre Einbauanordnung (1) nach einem der vorgehenden Ansprüche, **dadurch gekennzeichnet, dass** das Grundmaterial des Schlauches (3) und des Anschlussteils (2) Polyethylen, Polypropylen, Polyamid und/oder Polyketon oder eine Mischung davon aufweist.

9. Sanitäre Einbauanordnung (1) nach einem der vorgehenden Ansprüche, **dadurch gekennzeichnet, dass** das Grundmaterial optisch transparent ist.

10. Sanitäre Einbauanordnung (1) nach einem der vorgehenden Ansprüche, **dadurch gekennzeichnet, dass** zwischen dem Schlauch (3) und dem Anschlussteil (2) eine vorzugsweise umlaufende und/oder in Umfangsrichtung orientierte Laserschweißnaht (7) ausgebildet ist.

11. Sanitäre Einbauanordnung (1) nach einem der vorgehenden Ansprüche, **dadurch gekennzeichnet, dass** der Schlauch (3) in einer Presspassung in dem Anschlussteil (2) angeordnet ist.

12. Sanitäre Einbauanordnung (1) nach einem der vorgehenden Ansprüche, **dadurch gekennzeichnet, dass** das Anschlussteil (2) eine größere Steifigkeit und/oder größere Härte als der Schlauch (3) aufweist.

13. Sanitäre Einbauanordnung (1) nach einem der vorgehenden Ansprüche, **dadurch gekennzeichnet, dass** das Anschlussteil (2) in einem sichtbaren Spektralbereich transparent oder transluzent ausgebildet ist.

14. Sanitäre Einbauanordnung (1) nach einem der vorgehenden Ansprüche, **dadurch gekennzeichnet, dass** sie zu einem Einbau in einer Sanitärarmatur, insbesondere einem Auslaufrohr, ausgebildet ist.

15. Verwendung einer sanitären Einbauanordnung (1) nach einem der Ansprüche 1 bis 14 in einer Sanitärarmatur, insbesondere wobei der Schlauch (3) in einem Auslaufrohr der Sanitärarmatur angeordnet wird.

16. Sanitärarmatur mit einer sanitären Einbauanordnung (1) nach einem der Ansprüche 1 bis 14.

17. Verfahren zu einem fluidischen Anschluss eines sanitären Funktionsstücks, insbesondere eines Strahlreglers, mit einem Schlauch (3), wobei das sanitäre Funktionsstück mit einem Anschlussteil (2) fluidisch verbunden wird und der Schlauch (3) mit dem Anschlussteil (2) steckverbunden wird, wobei der Schlauch (3) und das Anschlussteil (2) gemäß einer sanitären Einbauanordnung (1) nach den Ansprüchen 1 bis 14 ausgebildet sind, **dadurch gekennzeichnet, dass** der Schlauch (3) und das Anschlussteil (2) stoffschlüssig verbunden werden.

18. Verfahren nach Anspruch 17, **dadurch gekennzeichnet, dass** der Schlauch (3) und das Anschlussteil (2) durch Schweißen, insbesondere Laserschweißen, Ultraschallschweißen oder Thermoschweißen, miteinander verbunden werden.

19. Verfahren nach Anspruch 17 oder18, **dadurch gekennzeichnet, dass** das Anschlussteil (2) zumindest bereichsweise durchlässig für ein Laserlicht des oder eines Laserschweißens ausgebildet ist.

20. Verfahren nach einem der vorhergehenden Ansprüche, **dadurch gekennzeichnet, dass** dem Anschlussteil (2) ein Verstärkungsadditiv, vorzugsweise ein Faserwerkstoff, insbesondere Glasfaser oder Aramidfaser, beigemischt wird.

21. Verfahren nach einem der vorhergehenden Ansprüche, **dadurch gekennzeichnet, dass** ein Strahlquerschnitt eines oder des Laserlichts gewählt wird, der größer ist als eine Ausdehnung eines Partikels des Verstärkungsadditivs ist.

22. Verfahren nach einem der vorhergehenden Ansprüche, **dadurch gekennzeichnet, dass** der Schlauch (3) mit dem Anschlussteil (2) während des Laserschweißens, vorzugsweise um eine Längsachse des Schlauches (3), rotiert wird.

23. Verfahren nach einem der vorhergehenden Ansprüche, **dadurch gekennzeichnet, dass** ein Laserkopf um den Schlauch (3) mit dem Anschlussteil (2) rotiert wird.

24. Verfahren nach einem der vorhergehenden Ansprüche, **dadurch gekennzeichnet, dass** der Schlauch (3) mit einer Presspassung mit dem Anschlussteil (2) steckverbunden wird, bevor die stoffschlüssige Verbindung (5), insbesondere durch Laserschweißen, hergestellt wird.

## Claims

1. Sanitary installation assembly (1), comprising a connecting part (2) and a hose (3), wherein the connecting part (2) has a hose receptacle (4) that overlaps the hose (3) in a direction of connection, wherein a materially bonded connection (5) exists between the connecting part (2) and the hose (3), **characterized in that** the connecting part (2) is light-transmissive in a spectral range in which the hose (3) is designed to be absorptive, and **in that** the connecting part (2) is provided with an admixture, wherein the admixture at least partially comprises an optically transparent reinforcing additive, preferably a fiber material, in particular glass fiber or aramid fiber.

2. Sanitary installation assembly (1) according to claim 1, **characterized in that** the hose (3) is inserted into the hose receptacle (4).

3. Sanitary installation assembly (1) according to one of the preceding claims, **characterized in that** the connecting part (2) is configured to accommodate a sanitary functional component, in particular a jet regulator.

4. Sanitary installation assembly (1) according to one of the preceding claims, **characterized in that** the connecting part (2) is designed as a fitting (6), in particular a push-fit and/or screw fitting.

5. Sanitary installation assembly (1) according to one of the preceding claims, **characterized in that** the materially bonded connection (5) is produced by welding, in particular laser welding, ultrasonic welding, or thermal welding.

6. Sanitary installation assembly (1) according to one of the preceding claims, **characterized in that** the hose (3) directly or indirectly forms a connection between a valve cartridge and the connecting part (2).

7. Sanitary installation assembly (1) according to one of the preceding claims, **characterized in that** the hose (3) and the connecting part (2) are made of a base material of the same type of plastic, in particular the same base material.

8. Sanitary installation assembly (1) according to one of the preceding claims, **characterized in that** the base material of the hose (3) and the connecting part (2) comprises polyethylene, polypropylene, polyamide, and/or polyketone, or a mixture thereof.

9. Sanitary installation assembly (1) according to one of the preceding claims, **characterized in that** the base material is optically transparent.

10. Sanitary installation assembly (1) according to one of the preceding claims, **characterized in that** a laser weld seam (7), preferably circumferential and/or oriented in the circumferential direction, is formed between the hose (3) and the connecting part (2).

11. Sanitary installation assembly (1) according to one of the preceding claims, **characterized in that** the hose (3) is arranged in a press fit in the connecting part (2).

12. Sanitary installation assembly (1) according to one of the preceding claims, **characterized in that** the connecting part (2) has greater stiffness and/or greater hardness than the hose (3).

13. Sanitary installation assembly (1) according to one of the preceding claims, **characterized in that** the connecting part (2) is designed to be transparent or translucent in a visible spectral range.

14. Sanitary installation assembly (1) according to one of the preceding claims, **characterized in that** it is designed for installation in a sanitary fixture, in particular an outlet pipe.

15. Use of a sanitary installation assembly (1) according to one of claims 1 to 14 in a sanitary fixture, in particular wherein the hose (3) is arranged in an outlet pipe of the sanitary fixture.

16. Sanitary fixture comprising a sanitary installation assembly (1) according to one of claims 1 to 14.

17. Method for fluidically connecting a sanitary functional component, in particular a jet regulator, to a hose (3), wherein the sanitary functional component is fluidically connected to a connecting part (2) and the hose (3) is plug-connected to the connecting part (2), wherein the hose (3) and the connecting part (2) are configured in accordance with a sanitary installation assembly (1) according to claims 1 to 14, **characterized in that** the hose (3) and the connecting part (2) are materially bonded.

18. Method according to claim 17, **characterized in that** the hose (3) and the connecting part (2) are joined together by welding, in particular laser welding, ultrasonic welding, or thermal welding.

19. Method according to claim 17 or 18, **characterized in that** the connecting part (2) is designed to be permeable at least in sections to laser light used in laser welding.

20. Method according to one of the preceding claims, **characterized in that** a reinforcing additive, preferably a fiber material, in particular glass fiber or aramid fiber, is mixed into the connecting part (2).

21. Method according to one of the preceding claims, **characterized in that** a beam cross-section of a or the laser light is selected that is larger than the dimension of a particle of the reinforcing additive.

22. Method according to one of the preceding claims, **characterized in that** the hose (3) with the connecting part (2) is rotated during laser welding, preferably about a longitudinal axis of the hose (3).

23. Method according to one of the preceding claims, **characterized in that** a laser head is rotated around the hose (3) with the connecting part (2).

24. Method according to one of the preceding claims, **characterized in that** the hose (3) is plug-connected to the connecting part (2) by a press fit before the materially bonded connection (5) is formed, in particular by laser welding.

## Revendications

1. Module d'installation sanitaire (1) comprenant une partie de raccordement (2) et un tuyau (3), dans lequel la partie de raccordement (2) possède un réceptacle de tuyau (4) qui recouvre le tuyau (3) dans une direction d'assemblage, un assemblage par solidarité de matière (5) étant établi entre la partie de raccordement (2) et le tuyau (3), **caractérisé en ce que** la partie de raccordement (2) laisse passer la lumière dans une bande du spectre dans laquelle le tuyau (3) est conçu pour l'absorber et **en ce que** la partie de raccordement (2) est dotée d'un additif, lequel additif contient au moins en partie un additif de renfort optiquement transparent, de préférence un matériau à base de fibres, en particulier des fibres de verre ou des fibres d'aramide.

2. Module d'installation sanitaire (1) selon la revendication 1, **caractérisé en ce que** le tuyau (3) est introduit dans le réceptacle de tuyau (4).

3. Module d'installation sanitaire (1) selon l'une des revendications précédentes, **caractérisé en ce que** la partie de raccordement (2) est configurée pour recevoir une pièce fonctionnelle sanitaire, en particulier un régulateur de jet.

4. Module d'installation sanitaire (1) selon l'une des revendications précédentes, **caractérisé en ce que** la partie de raccordement (2) est conçue comme un raccord (6), en particulier un raccord emboîté et/ou vissé.

5. Module d'installation sanitaire (1) selon l'une des revendications précédentes, **caractérisé en ce que** l'assemblage par solidarité de matière (5) est produit par soudage, en particulier par soudage par laser ou soudage par ultrasons ou soudage thermique.

6. Module d'installation sanitaire (1) selon l'une des revendications précédentes, **caractérisé en ce que** le tuyau (3) crée directement ou indirectement un assemblage entre la cartouche de robinet et la partie de raccordement (2).

7. Module d'installation sanitaire (1) selon l'une des revendications précédentes, **caractérisé en ce que** le tuyau (3) et la partie de raccordement (2) sont fabriqués dans un matériau de base appartenant au même type de plastique, en particulier dans le même matériau de base.

8. Module d'installation sanitaire (1) selon l'une des revendications précédentes, **caractérisé en ce que** le matériau de base du tuyau (3) et de la partie de raccordement (2) contient du polyéthylène, du polypropylène, du polyamide et/ou de la polycétone ou un mélange de ceux-ci.

9. Module d'installation sanitaire (1) selon l'une des revendications précédentes, **caractérisé en ce que** le matériau de base est optiquement transparent.

10. Module d'installation sanitaire (1) selon l'une des revendications précédentes, **caractérisé en ce qu'**une soudure par laser (7), de préférence circonférentielle et/ou orientée dans le sens de la circonférence, est formée entre le tuyau (3) et la partie de raccordement (2).

11. Module d'installation sanitaire (1) selon l'une des revendications précédentes, **caractérisé en ce que** le tuyau (3) est disposé dans un ajustement calé à la presse dans la partie de raccordement (2).

12. Module d'installation sanitaire (1) selon l'une des revendications précédentes, **caractérisé en ce que** la partie de raccordement (2) est plus rigide et/ou plus dure que le tuyau (3).

13. Module d'installation sanitaire (1) selon l'une des revendications précédentes, **caractérisé en ce que** la partie de raccordement (2) est conçue pour être transparente ou translucide dans une plage visible du spectre.

14. Module d'installation sanitaire (1) selon l'une des revendications précédentes, **caractérisé en ce qu'**il est conçu pour être monté dans une robinetterie sanitaire, en particulier un tuyau d'évacuation.

15. Utilisation d'un module d'installation sanitaire (1) selon l'une des revendications 1 à 14 dans une robinetterie sanitaire, le tuyau (3) étant en particulier disposé dans un tuyau d'évacuation de la robinetterie sanitaire.

16. Robinetterie sanitaire munie d'un module d'installation sanitaire (1) selon l'une des revendications 1 à 14.

17. Procédé pour un raccordement en vue de la circulation de fluide d'une pièce fonctionnelle sanitaire, en particulier d'un régulateur de jet, avec un tuyau (3), dans lequel la pièce fonctionnelle sanitaire est raccordée avec une partie de raccordement (2) en vue de la circulation de fluide et le tuyau (3) est raccordé par emboîtement avec la partie de raccordement (2), le tuyau (3) et la partie de raccordement (2) étant conçus comme un module d'installation sanitaire (1) selon les revendications 1 à 14, **caractérisé en ce que** le tuyau (3) et la partie de raccordement (2) sont assemblés par solidarité de matière.

18. Procédé selon la revendication 17, **caractérisé en ce que** le tuyau (3) et la partie de raccordement (2) sont assemblés par soudage, en particulier par soudage par laser ou soudage par ultrasons ou soudage thermique.

19. Procédé selon la revendication 17 ou 18, **caractérisé en ce que** la partie de raccordement (2) est conçue pour être au moins en partie transparente à une lumière laser du ou d'un soudage par laser.

20. Procédé selon l'une des revendications précédentes, **caractérisé en ce qu'**un additif de renfort, de préférence un matériau à base de fibres, en particulier des fibres de verre ou des fibres d'aramide, est ajouté à la partie de raccordement (2).

21. Procédé selon l'une des revendications précédentes, **caractérisé en ce qu'**une section de faisceau d'une ou de la lumière laser est choisie plus grande que l'étendue d'une particule de l'additif de renfort.

22. Procédé selon l'une des revendications précédentes, **caractérisé en ce que** le tuyau (3) est entraîné en rotation avec la partie de raccordement (2) pendant le soudage par laser, de préférence autour d'un axe longitudinal du tuyau (3).

23. Procédé selon l'une des revendications précédentes, **caractérisé en ce qu'**une tête de laser est entraînée en rotation autour du tuyau (3) avec la partie de raccordement (2).

24. Procédé selon l'une des revendications précédentes, **caractérisé en ce que** le tuyau (3) est assemblé par emboîtement avec un calage à la presse avec la partie de raccordement (2) avant la création de l'assemblage par solidarité de matière (5), en particulier par soudage par laser.
